(19) Europäisches Patentamt
European Patent Office
Office européen des brevets

(11) **EP 3 923 189 A1**

(12) **EUROPEAN PATENT APPLICATION**

(43) Date of publication:
**15.12.2021 Bulletin 2021/50**

(51) Int Cl.:
*G06K 9/34* (2006.01)    *G06K 9/32* (2006.01)
*G06K 9/38* (2006.01)    *G06K 9/46* (2006.01)
*G06K 9/00* (2006.01)

(21) Application number: **20305606.4**

(22) Date of filing: **08.06.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Interdigital CE Patent Holdings, SAS
75017 Paris (FR)**

(72) Inventors:
• SCHMOUKER, Philippe
  35576 Cesson-Sévigné (FR)
• THIEBAUD, Sylvain
  35576 Cesson-Sévigné (FR)
• MORVAN, Patrick
  35576 Cesson-Sévigné (FR)

(74) Representative: **Interdigital
975, avenue des Champs Blancs
35576 Cesson-Sévigné Cedex (FR)**

(54) **GENERATION OF METADATA FROM GRAPHICAL INLAYS INSERTED IN VIDEO FRAMES**

(57)    A method and a system for generating metadata from graphical inlays inserted in a video stream are disclosed. A graphical inlay is extracted from a video stream. The graphical inlay includes one or more objects. A contour is determined for each object of the one or more objects. A boundary is identified for the determined contour of each object. Metadata is then determined for each object based on the identified boundaries.

```
┌─────────────────────────────────┐
│ Providing extracted graphical   │──── 710
│ inlays from video frames of a   │
│ video stream including one or   │
│ more objects                    │
└─────────────────────────────────┘
              │
              ▼
┌─────────────────────────────────┐
│ Determining a contour for each  │──── 720
│ object of the one or more       │
│ objects in the extracted        │
│ graphical inlays                │
└─────────────────────────────────┘
              │
              ▼
┌─────────────────────────────────┐
│ Identifying a boundary for the  │──── 730
│ determined contour of each      │
│ object                          │
└─────────────────────────────────┘
              │
              ▼
┌─────────────────────────────────┐
│ Determining metadata for each   │──── 740
│ object based on the identified  │
│ boundaries                      │
└─────────────────────────────────┘

              700
```

FIG. 4

**Description**

TECHNICAL FIELD

The present disclosure generally relates to audiovisual production and/or consumption applications. At least one embodiment relates to the generation of metadata from graphical inlays inserted in video frames.

BACKGROUND

Graphical inlays may contain objects of many different types, such as, for example, logos or other types of graphics, as well as numbers and/or text. Graphical inlays including such objects are typically inserted in video frames by a producer/director or by the content owner in order to provide useful information to viewers during a live broadcast of a television program and/or a sporting event. The useful information may include, for example, scoring information, player name, player statistics, time information for the event being broadcast, team logos, team name, etc.

Such graphical inlays when inserted in the video frames by the content owners typically do not include associated metadata for the objects contained therein. This is because the content owners either own the media with the inserted graphical inlays or broadcasters may not wish to embed the associated metadata in dedicated tables to be broadcast along with the media, instead preferring to reserve as much bandwidth as possible solely for video streaming use.

In this regard, processing of graphical inlays that have been inserted into a video stream to extract and evaluate objects contained therein can be time consuming. The embodiments herein have been devised with the foregoing in mind.

SUMMARY

The disclosure is directed to a method for generating metadata from graphical inlays inserted in a video stream. The method may take into account implementation on devices, such as, for example mobile phones, tablets, set-top boxes, head mounted displays (HMD) and digital televisions.

According to a first aspect of the disclosure, there is provided a method, comprising: providing a graphical inlay extracted from a video stream, wherein the graphical inlay includes one or more objects; determining a contour for each object of the one or more objects; identifying a boundary for the determined contour of each object; and determining metadata for each object based on the identified boundaries.

The general principal of the proposed solution relates to the evaluation of graphical inlays inserted in to video frames to determine if words (i.e., groups of alpha numeric characters) and numbers (i.e., groups of digits) are present. Such an evaluation is used to position masks over determined words and numbers within the graphical inlays. The positions and/or sizes of these masks may be used to enhance/accelerate other applications that would, for example, extract characters from parts of images, evaluate changes over time in the display of graphical inlays or generate metadata that is timely associated with a media content.

In an embodiment, the determined metadata comprises at least one of position data, rotation data and size data for each object in the graphical inlay.

In an embodiment, the one or more objects comprise at least one of text, punctuation symbols, numbers and logos.

In an embodiment, the contour for each object comprises a list of 2D coordinate points on a border thereof.

In an embodiment, the contour for each object is determined using an edge extraction algorithm.

In an embodiment, the boundary for the determined contour of each object is identified using one of an ellipse and a rectangle.

In an embodiment, a binary mask is positioned over the identified boundary for each object; and combining two or more of the binary masks into a binary word mask using a morphological calculation.

According to a second aspect of the disclosure, there is provided a device, comprising at least one processor, configured to: provide a graphical inlay extracted from a video stream, wherein the graphical inlay includes one or more objects; determine a contour for each object of the one or more objects; identify a boundary for the determined contour of each object; and determine metadata for each object based on the identified boundaries.

In an embodiment, the determined metadata comprises at least one of position data, rotation data and size data for each object in the graphical inlay.

In an embodiment, the one or more objects comprise at least one of text, punctuation symbols, numbers and logos.

In an embodiment, the contour for each object comprises a list of 2D coordinate points on a border thereof.

In an embodiment, the contour for each object is determined using an edge extraction algorithm.

In an embodiment, the boundary for the determined contour of each object is identified using one of an ellipse and a rectangle.

In an embodiment, a binary mask is positioned over the identified boundary for each object; and combining two or more of the binary masks into a binary word mask using a morphological calculation.

Some processes implemented by elements of the disclosure may be computer implemented. Accordingly, such elements may take the form of an entirely hardware embodiment, an entirely software embodiment (including firmware, resident software, microcode, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an optical signal, an acoustic signal, a magnetic signal or an electromagnetic signal, e.g., a microwave or RF signal.

**BRIEF DESCRIPTION OF THE DRAWINGS**

Other features and advantages of embodiments shall appear from the following description, given by way of indicative and non-exhaustive examples and from the appended drawings, of which:

FIG. 1 illustrates an exemplary system for generating metadata from graphical inlays inserted in a video stream according to an embodiment of the disclosure;

FIG. 2 shows an exemplary video frame including a graphical inlay;

FIG. 3 shows an exemplary extracted graphical inlay;

FIG. 4 is a flowchart of a particular embodiment of a proposed method for generating metadata from graphical inlays inserted in a video stream;

FIG. 5 is a flowchart showing the method for obtaining a binarized version of an RGB graphical inlay;

FIG. 6 shows the exemplary extracted graphical inlay of FIG. 3 after conversion to gray scale luminance components Y;

FIG. 7 shows a histogram of gray scale luminance components Y;

FIG. 8 depicts the graphical inlay shown in FIG. 6 after statistical thresholding;

FIG. 9 shows an exemplary graphical inlay including bright objects on dark backgrounds;

FIG. 10 illustrates exemplary boundary shapes suitable for determining a boundary for the determined contour of each object of the graphical inlay;

FIG. 11 illustrates two exemplary methods to evaluate the "verticality" of the contour of an object in a graphical inlay;

FIG. 12 shows bounding shapes applied to the contours of all of the objects of the exemplary graphical inlay shown in FIG. 3;

FIG. 13 is a flow chart showing the steps for determining words based on groupings of the boundaries of object contours in the graphical inlay shown in FIG. 3;

FIG. 14 depicts a binary mask set over the boundaries of the contours of the exemplary RGB graphical inlay shown in FIG. 12;

FIG. 15 depicts a word binary mask generated on the binary mask shown in FIG. 14;

FIG. 16 illustrates the binary mask of words shown in FIG. 15 applied to the thresholded image of the graphical inlay to extract semantic information from the graphical inlay content; and

FIG. 17 illustrates an exemplary system for generating metadata from graphical inlays inserted in a video stream according to another embodiment of the disclosure.

## DETAILED DESCRIPTION

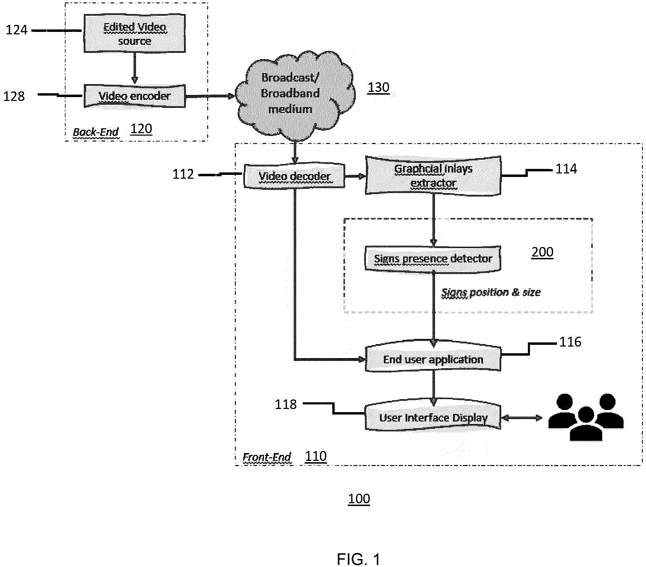

FIG. 1 illustrates an exemplary apparatus for generating metadata from graphical inlays inserted in a video stream according to an embodiment of the disclosure. FIG. 1 illustrates a block diagram of an exemplary system 100 in which various aspects of the exemplary embodiments may be implemented. The system 100 may include front-end 110, back-end 120 and broadcast/broadband medium 130.

Back-end 120 includes at least one processor 124 configured for storing and producing/editing video and a video encoder 128. Processor 124 may include editing software that is configured to insert graphical inlays including objects such as, for example, text, punctuation, numbers, logos, and symbols in video frames during a live broadcast of a television program and/or a sporting event as discussed below. The video encoder 128 converts the produced/edited video frames to a compressed format suitable to be broadcast.

The processor 124 may include embedded memory (not shown), an input-output interface (not shown), and various other circuitries as known in the art. Program code may be loaded into processor 124 to perform the various processes described hereinbelow.

Alternatively, back-end 120 may also include at least one memory (e.g., a volatile memory device, a non-volatile memory device) which stores program code to be loaded into the processor 120 for subsequent execution. Back-end 120 may additionally include a storage device (not shown), which may include non-volatile memory, including but not limited to EEPROM, ROM, PROM, RAM, DRAM, SRAM, flash, magnetic disk drive, and/or optical disk drive. The storage device may comprise an internal storage device, an attached storage device, and/or a network accessible storage device, as non-limiting examples.

Back-end 120 is coupled to broadcast/broadband medium 130. The encoded produced/edited video frames are transmitted to front-end 110 via broadcast/broadband medium 130.

Front-end 110 includes a video decoder 112, a graphical inlay extractor 114, at least one processor 200 configured for determining the presence of objects/signs in the extracted graphical inlays, at least one processor 116 configured to implement an end user application and a user interface/display 118.

The video decoder 112 converts the encoded produced/edited video frames transmitted via broadcast/broadband medium 130 to a decompressed format. The decoded video frames are provided to graphical inlay extractor 114 and processor 116. Processor 116 may be configured to implement any suitable end user application, such as, for example Optical Character Recognition (OCR).

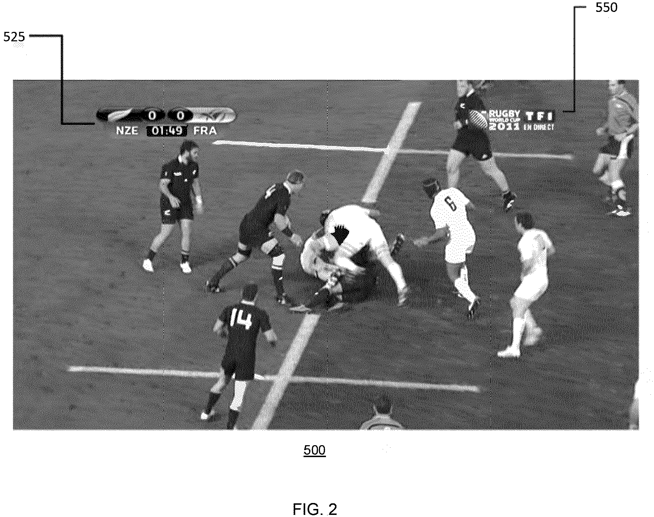

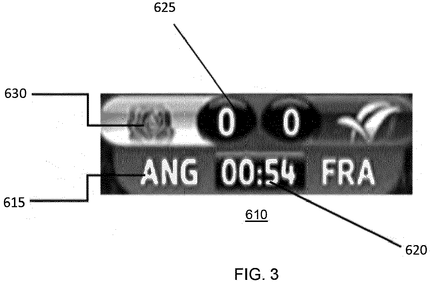

Referring to FIG. 2, an exemplary decompressed video frame 500 is shown. Video frame 500 includes graphical inlays 525, 550. Graphical inlay extractor 114 identifies graphical inlays 525, 550 inserted in the produced/edited video frames prior to encoding and transmission. An exemplary extracted graphical inlay 610 is shown in FIG. 3. Graphical inlay 610 as shown in FIG. 3, includes text 615, punctuation 620, numbers 625 and logos 630. Symbols (not shown) may also be included in the graphical inlay.

The extracted graphical inlays are provided to processor 200, which is configured to determine whether objects/signs are present therein. The processor 200 may include embedded memory (not shown), an input-output interface (not shown), and various other circuitries as known in the art. Program code may be loaded into processor 200 to perform the various processes described hereinbelow.

Alternatively, processor 200 may be coupled to at least one remote memory (e.g., a volatile memory device, a non-volatile memory device) which stores program code to be loaded into the processor 200 for subsequent execution. Processor 200 may additionally be coupled to a remote storage device (not shown), which may include non-volatile memory, including but not limited to EEPROM, ROM, PROM, RAM, DRAM, SRAM, flash, magnetic disk drive, and/or optical disk drive. The storage device may comprise an attached storage device, and/or a network accessible storage device, as non-limiting examples.

The general principal of the disclosure relates to the evaluation by processor 200 of graphical inlays inserted in to video frames to determine if words (i.e., groups of alpha numeric characters) and numbers (i.e., groups of digits) are present in order to generate metadata associated with a media content. The metadata is derived from the graphical inlay evaluation and is used to position masks over determined words and numbers within the graphical inlays. The positions and/or sizes of these masks may be used to enhance/accelerate other applications that would, for example, extract characters from parts of images, evaluate changes over time in the display of graphical inlays or generate metadata that is timely associated with a media content.

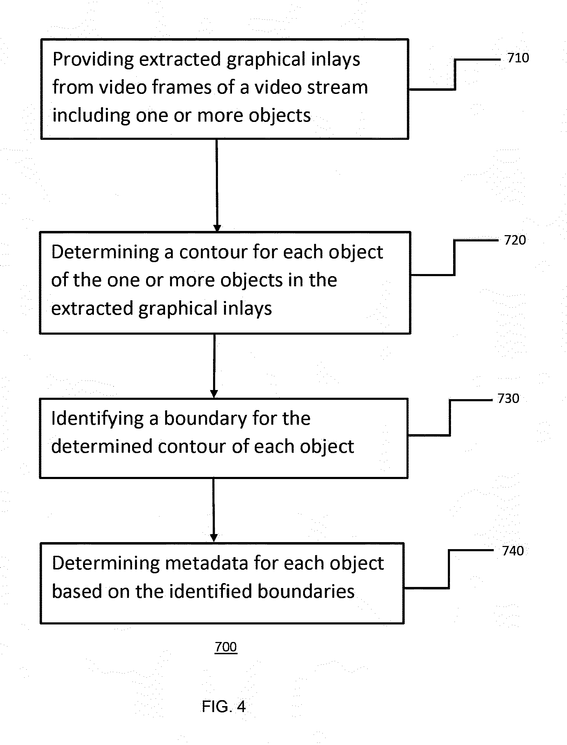

FIG. 4 is a flowchart of a particular embodiment of a proposed method 700 for generating metadata from graphical inlays inserted in a video stream. In this particular embodiment, the method 700 includes four consecutive steps 710 to 740.

In the exemplary implementation, described above, the method is carried out by processor 200 (FIG. 1). As described in step 710, the graphical inlays extracted from the video frames of the video stream are provided to processor 200. The extracted graphical inlays include one or more objects 615, 620, 625, 630 (FIG. 4).

Referring to step 720, a contour is determined for each object in the extracted one or more graphical inlays. The contour is a listing of 2D coordinate points that are on the border (outside edges) of the selected object in the graphical inlay. The contour for each object may be determined based on the edges of such object in the extracted graphical inlay.

One exemplary algorithm which may be used to determine the contour for each object is the Canny Edge Detector (see, CANNY, J., "A Computational Approach to Edge Detection", IEEE Transactions on Pattern Analysis and Machine Intelligence, Vol. 8, No. 6, 1986, pp. 679-698). For the Canny Edge Detector an edge detection operator that uses a multi-stage algorithm is used to detect edges of an object.

In Canny, a Gaussian filter is applied to the image of the object in order to remove noise. Thereafter, gradient magnitudes and directions in an image are evaluated and non-maximum suppression is applied to remove any spurious response to edge detection. Double thresholds are applied thereto (with a low and a high value) to determine potential edges. The detection of edges is finalized by keeping strong contours and weak contours in contact with at least one strong contour. All other edges that are weak are suppressed. The Canny Edge Detector usually requires long computation times to determine edges of objects.

Another exemplary algorithm that may be used to determine edges and/or contours is Suzuki's contour tracing algorithm (see, SUZUKI, ET AL., "Topological Structural Analysis of Digitized Binary Images by Border Following", Computer Vision, Graphics, and Image Processing, Vol. 30, No. 1, 1985, pp 32-46). Suzuki's algorithm is suitable for binarized images and is implemented in the Open Source library OpenCV. OpenCV is open source and released under the BSD 3-Clause License. OpenCV is free for commercial use.

Suzuki's algorithm implementation in OpenCV has a very short and nearly constant time calculation independent of the graphical inlay to be analyzed. Additionally, for small areas of video frames, such as, for example, graphical inlays, Suzuki's algorithm runs faster than real-time video. Suzuki's algorithm will be explained below with reference to an exemplary embodiment described below.

Referring again to FIG. 3, exemplary graphical inlay 610 extracted from a video frame, may be colored. In that instance, binarization is applied to the graphical inly before contour determination is performed.

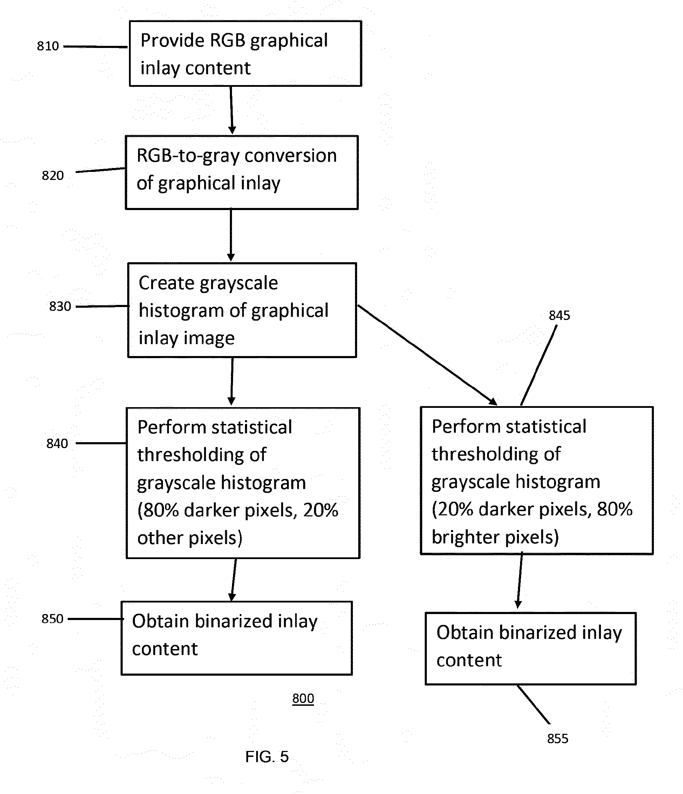

FIG. 5 is a flowchart 800 showing the steps for obtaining a binarized version of an RGB graphical inlay suitable for use when determining the contours of objects therein, via Suzuki's algorithm. Referring to step 810, RGB (color) graphical inlay content is provided from graphical inlay extractor 114 (FIG. 1). When black and white inlay content is provided from the graphical inlay extractor 114, the algorithm application begins at step 830 of FIG. 5, as discussed below.

At step 820 of FIG. 5, the content of the graphical inlay is converted to its luminance component Y. Any image is a set of dots that are defined as pixels. Each of these pixels can be represented as a triplet of RGB values in the case of a color image, and a single value if the image is in the gray scale. These values assume all values between 0 and 255. The classical formula is:

$$Y = \mathrm{int}\,(0.301R + 0.587G + 0.114B) \qquad (1)$$

As a simplification, the sole G component may be used instead:

$$Y = G \qquad (2)$$

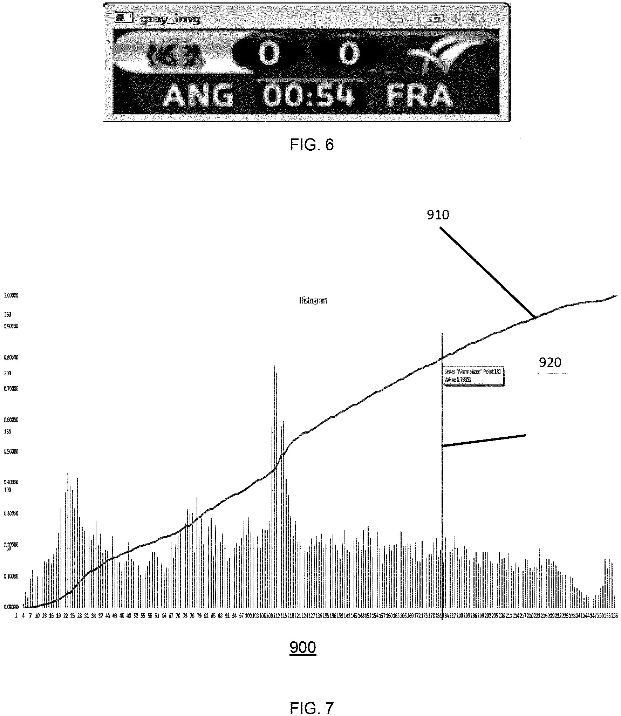

The exemplary RGB graphical inlay 610 (FIG. 3) after conversion to gray scale luminance components Y, is shown in FIG. 7.

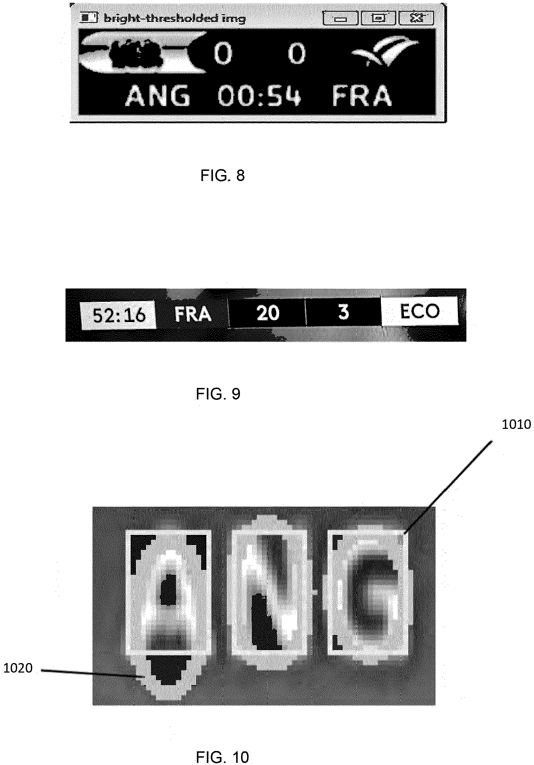

In FIG. 5 at step 830, the luminance component value Y are determined and used to create a histogram 900, as depicted in FIG. 8. In the histogram 900, gray scale content is shown from 0 to 255 on the horizontal axis. The normalized cumulative level on this histogram is shown as line 910, increasing from 0 % to 100 %.

At step 840 of FIG. 5, a threshold value is determined on the histogram 900. The threshold value 920 is the component value which separates the histogram 900 into two parts: the n % brighter pixels and the (100-n) % darker pixels. In one exemplary embodiment, n = 20, which means that every pixel in the graphical inlay for which the Y component belongs to the 80 % darker pixels is set to 0, and that the Y component that belongs to the 20 % remains at the actual value.

Referring to FIG. 7, the separating threshold value is 181, depicted by the line identified as line 920 on the histogram. At step 850, the thresholding is applied to the graphical inlay to obtain statistically thresholded inlay content. FIG. 8 depicts the newly evaluated graphical inlay. The statistically thresholded image is not an exactly black and white one. Every pixel with a value lower than the threshold value 181 is put to black.

In some instances, the graphical inlays may include bright objects that were inserted on dark backgrounds, as shown in FIG. 9. Referring to FIG. 5, for such an instance, steps 810-830 are unchanged. However, at step 845, the 20 % darker pixels remain at the actual value and the 80 % brighter pixels are set to the value at 255 on the horizontal axis. Then, these values are inverted as Y' = 255 - Y. At step 855, the thresholding is applied to the graphical inlay content as discussed above.

Referring again to step 720 of FIG. 4, in an exemplary embodiment the contour is determined for each object in the extracted one or more graphical inlays using Suzuki's algorithm. The use of Suzuki's algorithm in library OpenCV enables the determination of the sole outside contours of an identified object. For example, if the object is an 'A', the inner triangle of the 'A' will be ignored. Similarly, for a 'B' or an '8', the inner contours will also be ignored.

The contours determined using Suzuki's algorithm may be represented by lists of coordinates. The lists of coordinates are for the connected pixels that are on the outside border of each object from the thresholded graphical inlay content.

At step 730 of FIG. 4, a boundary is identified for the determined contour of each object of the graphical inlay content. A boundary is a shape (figure) within which the object of the graphical inlay content is totally contained, and which has a minimum area, when compared to other shapes containing this same object. For example, with reference to FIG. 10, two types of shapes, rectangles 1010 and ellipses 1020, are shown as encompassing each of the text objects whose contours have been determined in the graphical inlay. Other shapes, such as, for example, circles, squares, etc. may be used as well.

Algorithms for evaluating a boundary are well known. Implementations are available, for instance in library OpenCV. One example is OpenCV:function fitEllipse implements Fitzgibbon and Fisher algorithm (see, FITZGIBBON ET AL., "A Buyer's Guide to Conic Fitting", Proceedings of the 6th British Conference on Machine Vision, Vol. 2, (1995), pp. 513-522) for evaluating ellipse bounding. Rectangle bounding may be minimized using minimum and maximum values on the X and Y axis for every coordinate of the contour pixels.

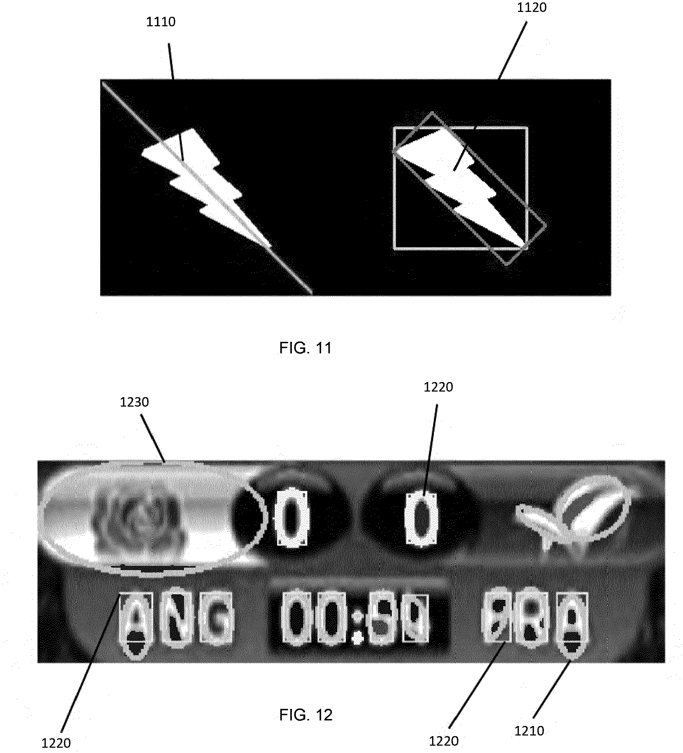

In the exemplary embodiment, ellipse bounding is used to evaluate the "verticality" of the obj ect contours. Ellipses have a main axis whose rotation angle is for the evaluation of their verticality. Verticality of the object contours can also be determined using line fitting 1110, or alternatively a rotated rectangle 1120, shown in FIG. 11. As shown in FIG. 11, the "verticality" of the contained object can be evaluated due to the rotation angle for line fitting 1110, and due to the main axis rotation angle of the rectangle for the rotated rectangle 1120.

Referring to FIG. 12, ellipse 1210 and/or rectangle 1220 bounding are applied to the contours of all of the objects of the exemplary graphical inlay shown in FIG. 3. When a bounding ellipse does not fit any of the proposed criteria on width, height and verticality around the contour of an object, the ellipse such as, ellipse 1230, for example, is associated with the corresponding zone of the graphical inlay as shown in FIG. 12.

Based on the identification of the boundary of each object in the graphical inlays meta data is determined according to step 740 of FIG. 4. The meta data of the boundaries of the objects will be related to the heights and widths for the boundary shapes. The meta data of the boundaries of the objects will be related to the heights and widths for the boundary shapes. The meta data typically will have some minimal and maximal widths and heights and are evaluated from the widths and heights of the bounding rectangles that fully embed the contours of objects in the graphical inlays. Additionally, meta data for a main axis angle for the object will approximate the verticality angle thereof ± a verticality α tolerance around the verticality value.

Exemplary meta data values that would fit the bounding of objects typically characterized as text, numbers and punctuation in graphical inlays are in the range of:

- minimum width: 5 pixels; maximum width: 48 pixels
- minimum height: 8 pixels; maximum height: 48 pixels

- α: 25° or $\frac{\pi}{7}$ rad

The verticality depends on the convention used. For the trigonometric convention, the verticality may be 90° or $\frac{\pi}{2}$ rad. For the OpenCV convention, the verticality may be 0° (0 rad)/ 180° (π rad). The verticality of the main axis of the contour (according to the typical verticality values expressed above) is either:

$$|\text{main axis angle-90}| \leq 25$$

or

$$(\text{main axis angle} \leq 25) \text{ or } (\text{main axis angle} \geq 180 - 25)$$

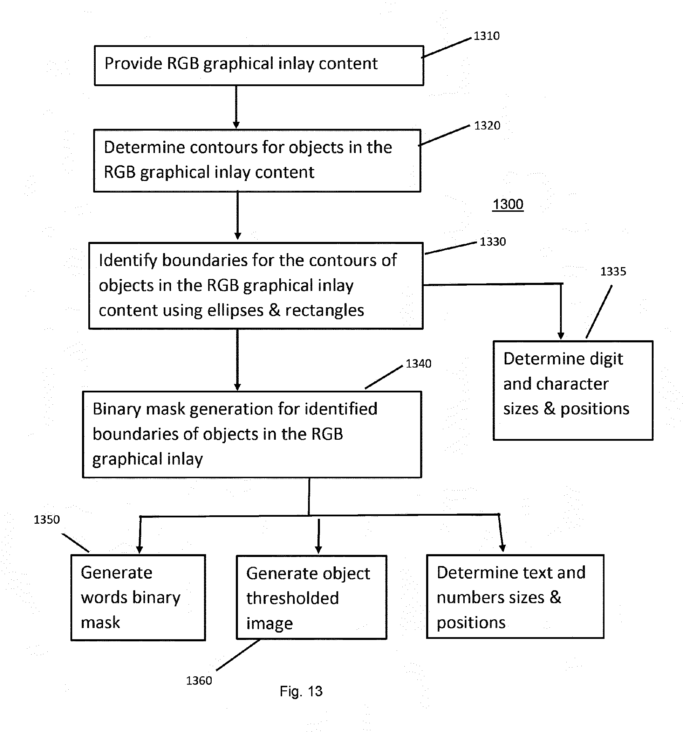

Based on the meta data described above and determined for the boundaries of object contours in the graphical inlays, text and numbers may be determined to be present. FIG. 13 is a flow chart 1300 detailing the steps for determining words based on groupings of the boundaries of object contours in the graphical inlays.

In this particular embodiment, at step 1310, RGB graphical inlay content is provided from graphical inlay extractor 114 (FIG. 1). The RGB content is thresholded according to the steps of FIG. 5, prior to contour determination in step 1320. At step 1330, in the exemplary embodiment, the boundaries for the contours of the object in the RGB graphical inlay is determined using for example, ellipses and rectangles. The rectangles and ellipses in the exemplary embodiment are a good fit for the algorithm needs, however squares and/or circles may also be used. Based on the boundaries of object contours in the graphical inlays meta data is determined for numbers (digits) and characters (letters or text) in step 1335. The meta data includes the sizes and locations (positions) for the numbers and characters.

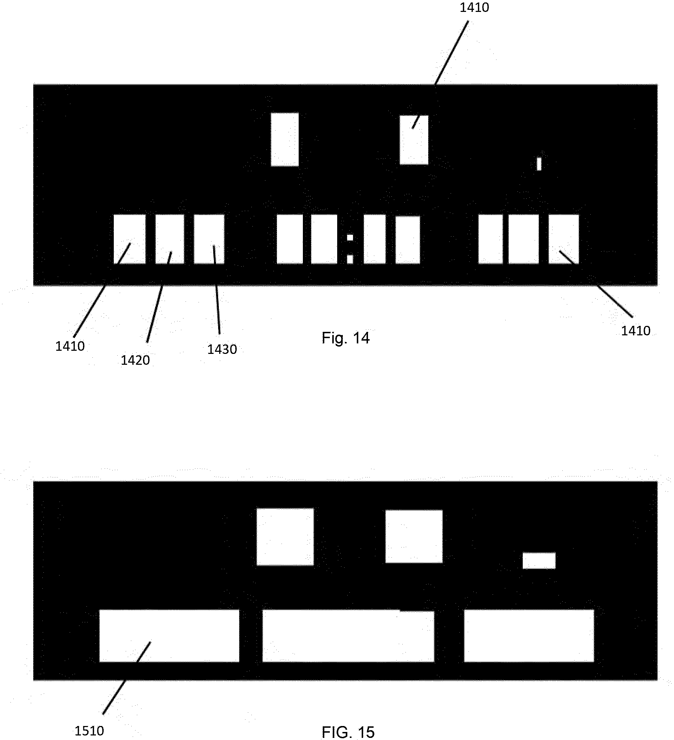

At step 1340 of FIG. 13, a binary mask is set over the boundaries of the contours of the RGB graphical inlay content. Referring to FIG. 14, the binary mask 1410 is set over the boundaries of the contours of the exemplary RGB graphical inlay shown in FIG. 12. The binary mask is the same size as the graphical inlay and its content is set to be 0. Then the content embedded within each bounding rectangle determined in step 1330 is set to 1 (or any other value different from 0). As shown in FIG. 14, the binary mask 1410 areas are white on the dark background of the graphical inlay. The binary mask may be considered an "intermediate mask".

Referring to step 1350 of FIG. 13, a morphological calculation is performed to *close* adjacent binary masks together into word binary masks. The closing of adjacent binary masks is used to remove any small holes from closed regions. An exemplary morphological calculation that can be used to form the binary words may be a *dilation* calculation. An exemplary dilation calculation is discussed below.

The dilation operation consists of convolving an image *A* with some kernel (*B*), which can have any shape or size, usually a square or circle. The kernel *B* has a defined *anchor point*, usually being the center of the kernel. As the kernel B is scanned over the image, we compute the maximal pixel value overlapped by B and replace the image pixel in the anchor point position with that maximal value. This maximizing operation causes bright regions within an image to "grow" (therefore the name *dilation*). The dilatation operation is:

$$\text{dst}(x, y) = \max_{(x', y'):\, \text{element}(x', y') \neq 0} \left( \text{src}(x+x', y+y') \right)$$

In the exemplary embodiment shown in FIG. 15, rectangles 1410, 1420, 1430 are dilated into a word mask 1510. The underlying kernel may be a rectangle also, which is the fastest mode of dilation. All of the kernel elements at positions *x', y'* are set to 1 (or to any other value different from 0). The dimensions of the kernel may be set a priori or dynamically according to the evaluated objects intermediate binary masks. The kernels for the dilation of every intermediate binary mask may be of sizes:

$$\begin{cases} height\ of\ kernel = \min\left( \dfrac{height\ of\ sign\ mask}{4},\ 3 \right) \\ width\ of\ kernel = \max\left( height\ of\ sign\ mask,\ \dfrac{3 \times width\ of\ sign\ mask}{2} \right) \end{cases}$$

Additionally, other values would also fit. For instance, it appears that for the graphical inlay used as illustration here, width = 15 and height = 3, were very good values for the dilation kernel.

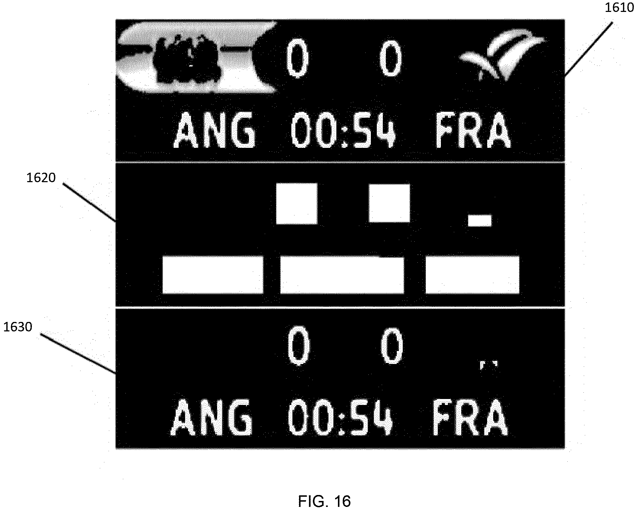

Referring to FIG. 13, at step 1360, the binary mask of words is applied to the thresholded image of the graphical inlay to generate an object thresholded image. This helps keep in graphical form, the sole words that should be evaluated/recognized to extract semantic information from the graphical inlay content. Referring to FIG. 16, an AND operator may be applied between the two upper images 1610, 1620 to obtain the lower image 1630, as the result. Any OCR function/method could then be applied to the lower image 1630.

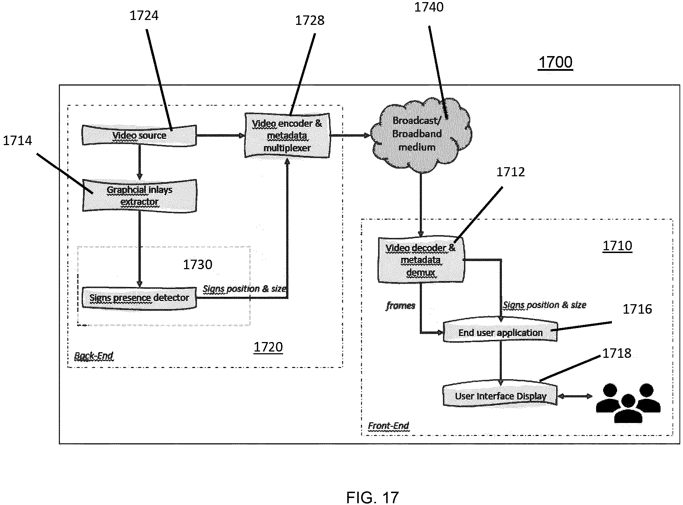

FIG. 17 shows another embodiment of an exemplary system suitable for embodiments described herein. FIG. 17 illustrates an exemplary apparatus for generating metadata from graphical inlays prior to insertion in a video stream according to another embodiment of the disclosure. FIG. 17 illustrates a block diagram of an exemplary system 1700 in which various aspects of the exemplary embodiments may be implemented. The system 1700 may include front-end 1710, back-end 1720 and broadcast/broadband medium 1740.

Back-end 1720 includes at least one processor 1724 configured for storing and producing/editing video, a graphical inlay extractor 1714, at least one processor 1730 configured for determining the presence of objects/signs in the extracted graphical inlays and a video encoder 1728. Processor 1724 may include editing software that is configured to insert graphical inlays including objects such as, for example, text, punctuation, numbers, logos, and symbols in video frames during a live broadcast of a television program and/or a sporting event as discussed below. The video encoder 128 converts the produced/edited video frames to a compressed format suitable to be broadcast.

Back-end 1720 is coupled to broadcast/broadband medium 1740. The encoded produced/edited video frames are transmitted to front-end 1710 via broadcast/broadband medium 1740.

Front-end 1710 includes a video decoder 1712, at least one processor 1716 configured to implement an end user application and a user interface/display 1718.

The video decoder 1712 converts the encoded produced/edited video frames transmitted via broadcast/broadband medium 1740 to a decompressed format. Processor 1716 may be configured to implement any suitable end user application, such as, for example Optical Character Recognition (OCR).

Although the present embodiments have been described hereinabove with reference to specific embodiments, the present disclosure is not limited to the specific embodiments, and modifications will be apparent to a skilled person in the art which lie within the scope of the claims.

Many further modifications and variations will suggest themselves to those versed in the art upon making reference to the foregoing illustrative embodiments, which are given by way of example only and which are not intended to limit the scope of the invention, that being determined solely by the appended claims. In particular, the different features from different embodiments may be interchanged, where appropriate.

**Claims**

1.  A method, comprising:

    providing a graphical inlay extracted from a video stream, wherein the graphical inlay includes one or more objects;
    determining a contour for each object of the one or more objects;
    identifying a boundary for the determined contour of each object; and
    determining metadata for each object based on the identified boundaries.

2.  The method of claim 1, wherein the determined metadata comprises at least one of position data, rotation data and size data for each object in the graphical inlay.

3.  The method of claim 1 or 2, wherein the one or more objects comprise at least one of text, punctuation symbols, numbers and logos.

4.  The method of any one of claims 1 to 3, wherein the contour for object comprises a list of 2D coordinate points on a border thereof.

5.  The method of any one of claims 1 to 4, wherein the contour for each object is determined using an edge extraction algorithm.

6.  The method of any one of claims 1 to 5, wherein the boundary for the determined contour of each object is identified using one of an ellipse and a rectangle.

7.  The method of any one of claims 1 to 6, further comprising:

    positioning a binary mask over the identified boundary for each object; and
    combining two or more of the binary masks into a binary word mask using a morphological calculation.

8.  A device, comprising at least one processor, configured to:

    provide a graphical inlay extracted from a video stream, wherein the graphical inlay includes one or more objects;
    determine a contour for each object of the one or more objects;
    identify a boundary for the determined contour of each object; and
    determine metadata for each object based on the identified boundaries.

9.  The device of claim 8, wherein the determined metadata comprises at least one of position data, rotation data and size data for each object in the graphical inlay.

10. The device of claim 8 or 9, wherein the one or more objects comprise at least one of text, punctuation symbols, numbers and logos.

11. The device of any one of claims 8 to 10, wherein the contour for each object comprises a list of 2D coordinate points on a border thereof.

12. The device of any one of claims 8 to 11, wherein the contour for each object is determined using an edge extraction algorithm.

13. The device of any one of claims 8 to 12, wherein the boundary for the determined contour of each object is identified using one of an ellipse and a rectangle.

14. The device of any one of claims 8 to 13, further comprising:

positioning a binary mask over the identified boundary for each object; and
combining two or more of the binary masks into a binary word mask using a morphological calculation.

15. A computer program product comprising instructions which when executed cause a processor to implement the method of any one of claims 1 to 7.

124 — Edited Video source

128 — Video encoder

*Back-End* 120

Broadcast/ Broadband medium   130

112 — Video decoder

Graphcial inlays extractor — 114

Signs presence detector   200

*Signs position & size*

End user application — 116

118 — User Interface Display

*Front-End*   110

100

FIG. 1

500

FIG. 2

FIG. 3

Providing extracted graphical inlays from video frames of a video stream including one or more objects — 710

Determining a contour for each object of the one or more objects in the extracted graphical inlays — 720

Identifying a boundary for the determined contour of each object — 730

Determining metadata for each object based on the identified boundaries — 740

700

FIG. 4

810 — Provide RGB graphical inlay content

820 — RGB-to-gray conversion of graphical inlay

830 — Create grayscale histogram of graphical inlay image

845

840 — Perform statistical thresholding of grayscale histogram (80% darker pixels, 20% other pixels)

Perform statistical thresholding of grayscale histogram (20% darker pixels, 80% brighter pixels)

850 — Obtain binarized inlay content

Obtain binarized inlay content

800

855

FIG. 5

FIG. 6

900

FIG. 7

FIG. 8

FIG. 9

FIG. 10

FIG. 11

FIG. 12

```
                                                                    1310
   ┌─────────────────────────────────────────┐─/
   │  Provide RGB graphical inlay content     │
   └─────────────────────────────────────────┘
                      │
                      ▼                             1320
   ┌─────────────────────────────────────────┐─/
   │  Determine contours for objects in the   │
   │  RGB graphical inlay content             │
   └─────────────────────────────────────────┘        1300
                      │
                      ▼                             1330                    1335
   ┌─────────────────────────────────────────┐─/                          /
   │  Identify boundaries for the contours of │──────────┐              ┌────────────────┐
   │  objects in the RGB graphical inlay      │          │              │ Determine digit│
   │  content using ellipses & rectangles     │          ▼              │ and character  │
   └─────────────────────────────────────────┘                         │ sizes &        │
                      │                         1340                    │ positions      │
                      ▼                          /                      └────────────────┘
   ┌─────────────────────────────────────────┐
   │  Binary mask generation for identified   │
   │  boundaries of objects in the RGB        │
   │  graphical inlay                         │
   └─────────────────────────────────────────┘
                      │
     1350    ┌────────┼────────────┐
       \     ▼        ▼            ▼
   ┌─────────┐  ┌──────────┐  ┌──────────────┐
   │ Generate│  │ Generate │  │ Determine    │
   │ words   │  │ object   │  │ text and     │
   │ binary  │  │thresholded│ │ numbers      │
   │ mask    │  │ image    │  │ sizes &      │
   └─────────┘  └──────────┘  │ positions    │
                   /          └──────────────┘
               1360
                        Fig. 13
```

Fig. 14

FIG. 15

1610
1620
1630

FIG. 16

1724   1728   1740   1700

1714

Video source → Video encoder & metadata multiplexer → Broadcast/ Broadband medium

Graphcial inlays extractor

1730

Signs presence detector — Signs position & size

Back-End   1720

1712

Video decoder & metadata demux   1710

frames   Signs position & size   1716

End user application

1718

User Interface Display

Front-End

FIG. 17

**Europäisches Patentamt**
**European Patent Office**
**Office européen des brevets**

# EUROPEAN SEARCH REPORT

Application Number

EP 20 30 5606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/303942 A1 (CHANG SHIH-FU [US] ET AL) 11 December 2008 (2008-12-11) <br> * abstract * <br> * claim 1 * <br> * paragraphs [0005], [0006] * <br> * paragraphs [0010], [0012] * <br> * paragraphs [0037] - [0039] * <br> * paragraphs [0043] - [0046], [0049] * <br> * paragraphs [0058] - [0064], [0071] * <br> ----- | 1-15 | INV. <br> G06K9/34 <br> G06K9/32 <br> G06K9/38 <br> G06K9/46 <br> G06K9/00 |

TECHNICAL FIELDS
SEARCHED      (IPC)

G06K

The present search report has been drawn up for all claims

| Place of search | Date of completion of the search | Examiner |
|---|---|---|
| The Hague | 20 November 2020 | Peelen, Bastien |

## ANNEX TO THE EUROPEAN SEARCH REPORT
## ON EUROPEAN PATENT APPLICATION NO.

EP 20 30 5606

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2020

| Patent document cited in search report | Publication date | Patent family member(s) | Publication date |
|---|---|---|---|
| US 2008303942 A1 | 11-12-2008 | AU 2002351310 A1 | 23-06-2003 |
| | | US 2004255249 A1 | 16-12-2004 |
| | | US 2008303942 A1 | 11-12-2008 |
| | | US 2013293776 A1 | 07-11-2013 |
| | | WO 03051031 A2 | 19-06-2003 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CANNY, J.** A Computational Approach to Edge Detection. *IEEE Transactions on Pattern Analysis and Machine Intelligence,* 1986, vol. 8 (6), 679-698
- **SUZUKI et al.** Topological Structural Analysis of Digitized Binary Images by Border Following. *Computer Vision, Graphics, and Image Processing,* 1985, vol. 30 (1), 32-46

- **FITZGIBBON et al.** A Buyer's Guide to Conic Fitting. *Proceedings of the 6th British Conference on Machine Vision,* 1995, vol. 2, 513-522